# EUROPEAN PATENT APPLICATION

(11) **EP 4 628 247 A1**
(43) Date of publication of application: **08.10.2025**
(21) Application number: 24883597.7
(22) Date of filing: 31.07.2024
(51) Int. Cl.: B23P 19/06, B25B 27/00

(54) **TIGHTENING DEVICE AND BATTERY MANUFACTURING SYSTEM**

(30) Priority: 18.02.2024 CN 202420292090 U
(71) Applicant: Contemporary Amperex Technology Co., Limited, Ningde, Fujian 352100 (CN)
(72) Inventor: SUN, Zhiqiang, Ningde Fujian 352100 (CN); SHEN, Yafei, Ningde Fujian 352100 (CN); HUANG, Hua, Ningde Fujian 352100 (CN); ZHANG, Xiaoren, Ningde Fujian 352100 (CN); LUO, Yonghua, Ningde Fujian 352100 (CN); ZHAO, Meng, Ningde Fujian 352100 (CN)
(74) Representative: Kraus & Lederer PartGmbB
(86) International application number: PCT/CN2024/108891
(87) International publication number: WO 2025/171701

(57) **Abstract**

The present application relates to a tightening apparatus and a battery manufacturing system. The tightening apparatus includes: a loading station, configured to bear an assembly to be tightened; a moving device, capable of moving relative to the loading station; a tightening device, arranged on the moving device; and a vision device, arranged on the moving device and configured to identify positions to be tightened of the assembly to be tightened on the loading station; where the moving device is configured to control the tightening device to move right above the positions to be tightened according to the positions to be tightened of the assembly to be tightened that are identified by the vision device, and the tightening device is configured to tighten tightening components to the positions to be tightened.

## Description

### RELATED APPLICATION

The present application claims priority to Chinese Patent Application No. 2024202920905 filed on February 18, 2024 and entitled "TIGHTENING APPARATUS AND BATTERY MANUFACTURING SYSTEM", which is hereby incorporated by reference in its entirety.

### TECHNICAL FIELD

The present application relates to the technical field of battery manufacturing, and in particular, to a tightening apparatus and a battery manufacturing system.

### BACKGROUND

The statements herein only provide background information related to the present application and do not necessarily constitute the prior art.

A battery includes a case and a plurality of battery cells, and the plurality of battery cells are accommodated in the case. The case typically includes two parts: a case body and a cover. In the battery manufacturing process, the plurality of battery cells need to be accommodated in the case body first, then the cover is lidded with an opening of the case body, and the cover is connected to the case body with screws. In the related art, after the cover is positioned to the case body, a tightening gun is required to tighten the screws into the cover and the case body. However, the tightening failure rate of the screws is high and the tightening efficiency is low.

### SUMMARY

In view of the issues, the present application provides a tightening apparatus and a battery manufacturing system, which can relieve the problems of high tightening failure rate and low tightening efficiency.

In a first aspect, the present application provides a tightening apparatus, which includes:
a loading station, configured to bear an assembly to be tightened;
a moving device, capable of moving relative to the loading station;
a tightening device, arranged on the moving device; and
a vision device, arranged on the moving device and configured to identify positions to be tightened of the assembly to be tightened on the loading station;
where the moving device is configured to control the tightening device to move right above the positions to be tightened according to the positions to be tightened of the assembly to be tightened that are identified by the vision device, and the tightening device is configured to tighten tightening components to the positions to be tightened.

The aforementioned tightening apparatus operates as follows: after the loading station bears the assembly to be tightened, the moving device may drive the vision device proximal to the assembly to be tightened to identify the positions to be tightened of the assembly to be tightened; according to the positions to be tightened, the moving device may control the tightening device to move to the positions to be tightened, and subsequently, the tightening device tightens the tightening components to the positions to be tightened of the assembly to be tightened, thereby completing the tightening operation. Since the positions to be tightened of the assembly to be tightened are identified by the vision device before a tightening operation, the moving device is capable of accurately driving the tightening device to be right above the positions to be tightened to tighten the tightening components to the positions to be tightened of the assembly to be tightened with success. Therefore, the tightening failure rate of the tightening components is reduced, and due to the use of the tightening device that automatically tightens the assembly to be tightened, the tightening efficiency is also improved.

In some embodiments, the tightening device includes a plurality of tightening mechanisms, all of the tightening mechanisms are spaced apart from each other, and each tightening mechanism is capable of tightening the tightening component to the corresponding position to be tightened.

By the arrangement of the plurality of tightening mechanisms, a plurality of positions to be tightened of the assembly to be tightened can be tightened simultaneously, thereby improving the tightening efficiency.

In some embodiments, the tightening device further includes a pitch adjustment mechanism, the pitch adjustment mechanism being connected to at least one tightening mechanism and configured to adjust the spacing between at least two tightening mechanisms.

When tightening operations are performed on assemblies to be tightened provided with different models, due to various dimensions of the assemblies to be tightened, the positions to be tightened of each assembly to be tightened are different. In the case where there are numerous tightening mechanisms, the pitch adjustment mechanism may be configured to adjust the spacing between at least two tightening mechanisms, allowing the tightening mechanisms to adapt to the tightening operations at different positions to be tightened, thereby enhancing the adaptability of the tightening apparatus.

In some embodiments, the tightening mechanism includes a mechanism body and a lifting mechanism, where the lifting mechanism is connected to the mechanism body and is configured to drive the mechanism body to perform a lifting motion.

By the arrangement of the lifting mechanism to drive the mechanism body to perform a lifting motion, in an aspect, the mechanism body is capable of descending to a position proximal to the assembly to be tightened to facilitate the tightening operation, and in another aspect, the mechanism body is capable of being lifted up to reduce the damage caused by collision between the mechanism body and other devices when the moving device drives the tightening device to move.

In some embodiments, the moving device is capable of driving the vision device to move along a preset direction to identify a plurality of positions to be tightened of the assembly to be tightened on the loading station.

The moving device is configured to control the tightening device to sequentially move right above the plurality of positions to be tightened according to the plurality of positions to be tightened of the assembly to be tightened that are identified by the vision device, and the tightening device tightens the respective tightening component to each position to be tightened.

In the case where there are a plurality of positions to be tightened, the moving device is arranged to drive the vision device to move along a preset direction to acquire the plurality of positions to be tightened of the assembly to be tightened. Subsequently, according to the plurality of positions to be tightened, the moving device controls the tightening device to sequentially move right above the plurality of positions to be tightened, and the tightening device tightens the respective tightening component to each position to be tightened, which can satisfy sequential tightening operations on the plurality of positions to be tightened and increase the tightening success rate, thereby improving the tightening efficiency.

In some embodiments, the vision device includes at least two cameras, all of the cameras being configured to jointly identify at least two positions to be tightened of the assembly to be tightened on the loading station.

It is not only simple to arrange at least two cameras to identify the positions to be tightened of the assembly to be tightened on the loading station, but also has a wider field of view provided by at least two cameras, which is conducive to improving the reliability of the identification of the positions to be tightened and may also adapt to an assembly to be tightened which is provided with a larger dimension.

In some embodiments, the tightening apparatus further includes a gripping device, the gripping device being capable of being arranged on the moving device;
the gripping device is configured to grip a first component to be tightened in the assembly to be tightened at a gripping position, and place the first component to be tightened at a placement position on the loading station, such that the first component to be tightened is assembled with other components to be tightened in the assembly to be tightened on the loading station.

By the arrangement of the gripping device, the first component to be tightened can be automatically gripped and assembled with other components to be tightened, which can improve the assembly precision, thereby increasing the tightening success rate. In addition, the gripping device and the tightening device share the same moving device, which simplifies the overall structure of the tightening apparatus and saves space.

In some embodiments, the moving device is capable of mating with one of the gripping device or the tightening device.

The operations of the gripping device and the tightening device cannot be performed simultaneously, therefore, when both the gripping device and the tightening device are arranged on the moving device at the same time, in an aspect, the independent operation of the gripping device and the tightening device is affected, and in another aspect, the load on the moving device is also increased. Therefore, by arranging the moving device to mate with one of the gripping device or the tightening device, the moving device is capable of detaching the tightening device and only mating with the gripping device when the gripping device is required to grip the first component to be tightened; while the moving device is capable of detaching the gripping device and only mating with the tightening device when the tightening device is required for a tightening operation. This not only improves the reliability of the independent operation of the gripping device and the tightening device, but also reduces the load on the moving device.

In some embodiments, the tightening device includes a first mating structure, and the moving device includes a switching mechanism, the switching mechanism being capable of mating with or detaching from the first mating structure;
the gripping device includes a second mating structure, and the switching mechanism is also capable of mating with or detaching from the second mating structure.

In this way, the switching mechanism is capable of mating with or detaching from the first mating structure and the second mating structure to improve the reliability and the precision of the moving device's mating with the tightening device and the gripping device.

In some embodiments, the tightening apparatus further includes a pressing device, the pressing device being arranged on the loading station;
the pressing device is configured to press the assembly to be tightened on the loading station or to detach from the assembly to be tightened.

By using the pressing device to press the assembly to be tightened on the loading station, the assembly to be tightened can be fixed before the tightening device performs the tightening operation, which reduces the force exerted on the assembly to be tightened during the tightening process and prevents positional shifts between components that could lead to tightening failure. Therefore, the tightening success rate is improved.

In some embodiments, the pressing device includes pressing assemblies, and each pressing assembly includes pressing blocks, a telescoping mechanism, and a pressing drive mechanism, where the telescoping mechanism is connected to the pressing drive mechanism and the pressing blocks, the telescoping mechanism is configured to drive the pressing blocks to perform a telescoping motion, and the pressing drive mechanism is configured to drive the pressing blocks to perform a pressing motion to press the assembly to be tightened on the loading station, a direction of the pressing motion intersecting with the direction of the telescoping motion.

By the arrangement of connecting the pressing drive mechanism to the pressing blocks, the pressing blocks are capable of pressing the assembly to be tightened on the loading station, which simplifies the pressing process. By the arrangement of connecting the telescoping mechanism to the pressing blocks, in an aspect, when the telescoping mechanism extends, the pressing blocks can accurately press the assembly to be tightened, and in another aspect, when the telescoping mechanism retracts, the placement of the first component to be tightened by the aforementioned gripping device at the placement position is not affected, and the identification of the position to be tightened of the assembly to be tightened by a vision device on the loading station is not affected either.

In some embodiments, there are a plurality of pressing blocks, the clearance space is formed between at least two adjacent pressing blocks, and the clearance space is configured to expose the position to be tightened of the assembly to be tightened.

By the arrangement of forming the clearance space between at least two adjacent pressing blocks that are spaced apart, the impact of the pressing blocks on the tightening operation by the tightening device on the assembly to be tightened is reduced, which makes the tightening operation more reliable.

In some embodiments, the pressing device includes at least two sets of pressing assemblies, and the at least two sets of pressing assemblies are oppositely arranged along the direction of the telescoping motion.

In this way, pressing can be formed on at least two opposite sides of the assembly to be pressed, thereby improving the reliability of the pressing process.

In some embodiments, the loading station further includes a transport platform and a positioning mechanism, where the transport platform is capable of bearing and transporting the assembly to be tightened, and the positioning mechanism is capable of positioning the assembly to be tightened on the transport platform.

Typically, the transport platform is capable of directly interfacing with and transporting the assembly to be tightened to the transport mechanism of the tightening apparatus, such that the manufacturing continuity of the product corresponding to the assembly to be tightened is enhanced, thereby improving the production efficiency, while the arrangement of the positioning mechanism ensures that the assembly to be tightened is more reliably positioned on the transport platform to facilitate corresponding operations on the assembly to be tightened by other devices of the tightening apparatus.

In a second aspect, provided is a battery manufacturing system, which includes the tightening apparatus according to any of the above embodiments.

The aforementioned battery manufacturing system operates as follows: after the loading station bears the assembly to be tightened, the moving device may drive the vision device proximal to the assembly to be tightened to identify the positions to be tightened of the assembly to be tightened; according to the positions to be tightened, the moving device may control the tightening device to move to the positions to be tightened, and subsequently, the tightening device tightens the tightening components to the positions to be tightened of the assembly to be tightened, thereby completing the tightening operation. Since the positions to be tightened of the assembly to be tightened are identified by the vision device before a tightening operation, the moving device is capable of accurately driving the tightening device to be right above the positions to be tightened to tighten the tightening components to the positions to be tightened of the assembly to be tightened with success. Therefore, the tightening failure rate of the tightening components is reduced, and due to the use of the tightening device that automatically tightens the assembly to be tightened, the tightening efficiency is also improved.

The above description is only an overview of the technical solution of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts.
FIG. 1 is a schematic structural diagram of a tightening apparatus according to one or a plurality of embodiments.
FIG. 2 is a schematic structural diagram of a gripping device at a placement position within a tightening apparatus in FIG. 1.
FIG. 3 is a schematic structural diagram of a tightening device located right above positions to be tightened within the tightening apparatus in FIG. 1.
FIG. 4 is a schematic structural diagram of a tightening device placed on a support within the tightening apparatus in FIG. 1.
FIG. 5 is a schematic side surface structural diagram of the tightening device placed on the support shown in FIG. 4.
FIG. 6 is a schematic structural diagram of a gripping device placed on a placement support within the tightening apparatus in FIG. 1.
FIG. 7 is a schematic structural diagram of a pressing device within the tightening device in 1.
FIG. 8 is an enlarged schematic structural diagram of a part A within the pressing device shown in FIG. 7.

Reference numerals in the detailed description are as follows:
A tightening apparatus 100, a loading station 10, a transport platform 11, a transport frame 111, a transport wheel 112, a positioning mechanism 12, a moving device 20, a tightening device 30, a tightening mechanism 31, a mechanism body 311, a lifting mechanism 312, a pitch adjustment mechanism 32, a translation cylinder 321, a guide rail 322, a slider 323, a tightening support 33, a base 331, a vertical frame 332, a first mating structure 34, a vision device 40, a camera 41, a gripping device 50, a suction cup 51, a sub-suction cup 511, a second mating structure 52, a placement support 60, a pressing device 70, a pressing assembly 71, a pressing block 711, a telescoping mechanism 712, a pressing drive mechanism 713, a first connecting plate 714, a second connecting plate 715, a guide rod 716, a buffer member 717, an assembly 200 to be tightened, a first component 210 to be tightened, and a second component 220 to be tightened.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the protection scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the indicated technical features. In the description of the embodiments of the present application, unless otherwise specifically defined, "a plurality of" means two or more than two.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "1 and/or 2" may denote: the presence of 1 alone, the simultaneous presence of 1 and 2, and the presence of 2 alone. In addition, the character "/" herein generally indicates an "or" relationship between the associated objects before and after the "/".

In the description of the embodiments of the present application, the term "a plurality of" refers to more than two (including two). Similarly, "multiple groups" refers to more than two groups (including two groups), and "multiple pieces" refers to more than two pieces (including two pieces).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings. They are merely for the convenience of describing the embodiments of the present application and simplifying the description, and are not intended to indicate or imply that the devices or elements referred to must have specific directions, be constructed and operated in specific directions. Therefore, these terms should not be construed as limitations on the embodiments of the present application.

In the description of the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments of the present application can be interpreted according to the specific condition.

At present, batteries on the market typically use metallic cases, and a case structure is typically formed by combining a case body located below and a cover located above. In the battery manufacturing process, a battery cell and related electrical elements are typically arranged in the case body first, and then the cover is assembled with the case body and is tightened by screws, ultimately forming the case.

In the related art, the cover and the case body are typically combined in a manual method, and then a tightening gun is used to tighten the screws onto the combined cover and case body. However, due to the large number of screw positions on both the cover and the case body, manual tightening often relies on visual identification of the screw positions without precise positioning, and thus the screws are prone to misalign during the tightening process. As a result, the tightening failure rate of the screws is high and when misalignment occurs, the screws need to be removed and re-tightened or replaced, which reduces the tightening efficiency.

To relieve the problems of high tightening failure rate of the screws and low tightening efficiency in the related art, a tightening apparatus is designed according to the embodiments of the present application. The tightening apparatus includes a loading station, a moving device, a tightening device, and a vision device. The loading station is configured to bear an assembly to be tightened, the moving device is capable of moving relative to the loading station, the tightening device is arranged on the moving device, and the vision device is arranged on the moving device and is configured to identify positions to be tightened of the assembly to be tightened on the loading station, where the moving device is configured to control the tightening device to move right above the positions to be tightened according to the positions to be tightened of the assembly to be tightened that are identified by the vision device, and the tightening device is configured to tighten tightening components to the positions to be tightened of the assembly to be tightened.

In this way, after the loading station bears the assembly to be tightened, the moving device may drive the vision device proximal to the assembly to be tightened to identify the positions to be tightened of the assembly to be tightened; according to the positions to be tightened, the moving device controls the tightening device to move right above the positions to be tightened, and subsequently, the tightening device tightens the tightening components to the positions to be tightened of the assembly to be tightened, thereby completing the tightening operation. Since the positions to be tightened of the assembly to be tightened are identified by the vision device before the tightening operation, the moving device is capable of accurately driving the tightening device to move right above the positions to be tightened to tighten the tightening components to the positions to be tightened of the assembly to be tightened with success. Therefore, the tightening failure rate of the tightening components is reduced, and due to the use of the tightening device that automatically tightens the assembly to be tightened, the tightening efficiency is also improved.

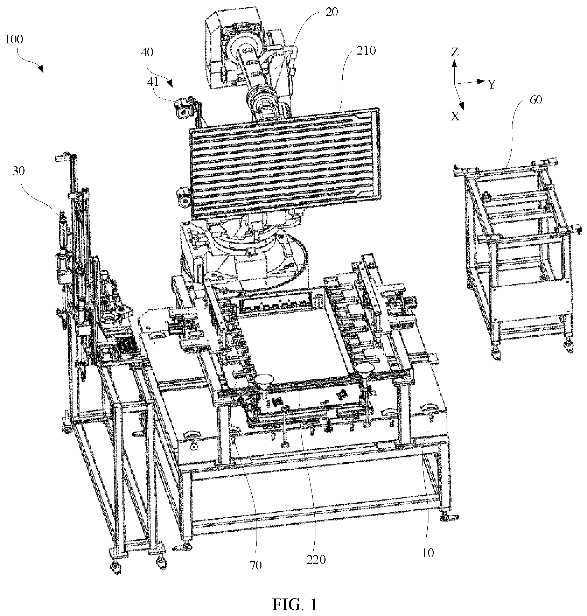

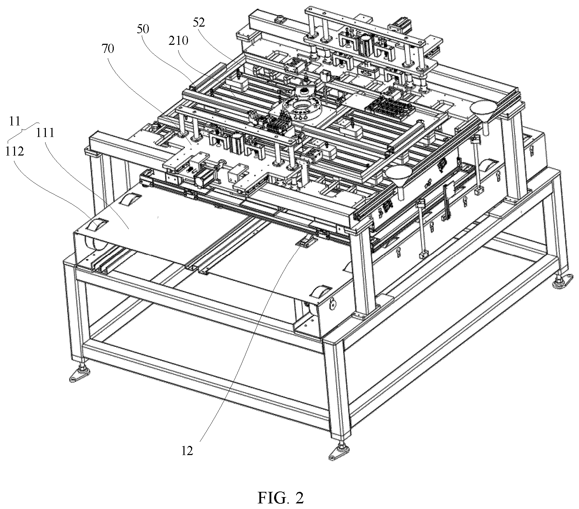

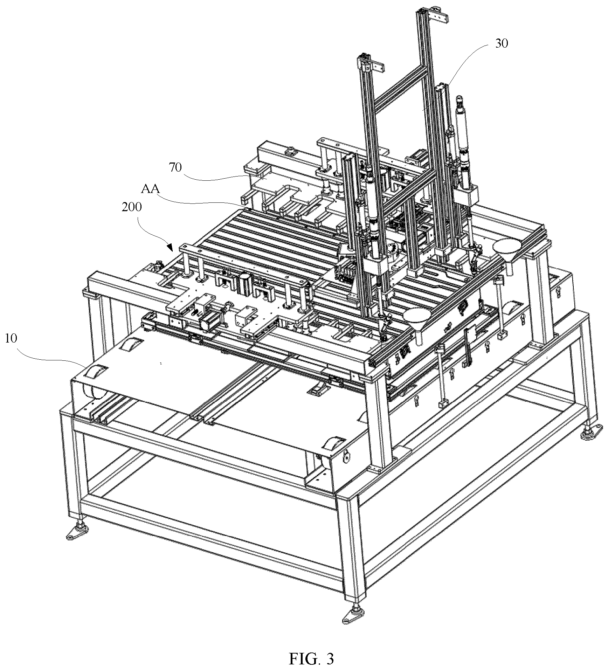

FIG. 1 is a schematic structural diagram of a tightening apparatus according to one or a plurality of embodiments. FIG. 2 is a schematic structural diagram of a gripping device at a placement position within a tightening apparatus in FIG. 1. FIG. 3 is a schematic structural diagram of a tightening device located right above positions to be tightened within the tightening apparatus in FIG. 1. Referring to FIGs. 1 to 3, an embodiment of the present application provides a tightening apparatus 100, which includes a loading station 10, a moving device 20, a tightening device 30, and a vision device 40. The loading station 10 is configured to bear an assembly 200 to be tightened, the moving device 20 is capable of moving relative to the loading station 10, the tightening device 30 is arranged on the moving device 20, and the vision device 40 is arranged on the moving device 20 and is configured to identify the positions AA to be tightened of the assembly 200 to be tightened on the loading station 10. The moving device 20 is configured to control the moving device 20 to move right above the positions AA to be tightened according to the positions AA to be tightened of the assembly 200 to be tightened that are identified by the vision device 40, and the tightening device 30 is configured to tighten tightening components to the positions AA to be tightened of the assembly 200 to be tightened.

The loading station 10 is a bearing mechanism configured to bear the assembly 200 to be tightened. The structural form of the loading station 10 is not limited to a loading rack, a loading tray, a loading conveyor belt, or the like.

The moving device 20 refers to a mechanism that is capable of driving a device attached on the moving device to move. The motion form of the moving device 20 is not limited to translation and rotation, and the moving device may also perform a curvilinear motion along a preset direction, or a combination of a plurality of motion forms. The motion device 20 may be a robot arm, a lifting device, a horizontal moving device, or the like.

The tightening device 30 and the vision device 40 may be fixedly or detachably arranged on the moving device 20. In the embodiments of the present application, the vision device 40 is directly arranged on the moving device 20. In this way, the vision device can follow the motion of the moving device 20 to correctly acquire the position to be tightened. In other embodiments, the vision device 40 may also be arranged on the tightening device 30. As such, the vision device may be arranged indirectly on the moving device 20 through the tightening device 30. It should be noted here that the field of view of the vision device 40 for acquiring the position to be tightened should not be affected when the tightening device 30 is assembled onto the moving device 20.

The assembly 200 to be tightened according to the embodiments of the present application may be an assembly combined by a case body and a cover, or may be other assemblies to be tightened. The tightening components according to the embodiments of the present application may be screws or other tightening components. The positions AA to be tightened may be the positions of screw holes.

After the loading station 10 bears the assembly 200 to be tightened, the moving device 20 may drive the vision device 40 proximal to the assembly 200 to be tightened to identify the positions AA to be tightened of the assembly 200 to be tightened; according to the positions AA to be tightened, the moving device 20 may control the tightening device 30 to move to the positions AA to be tightened; and subsequently, the tightening device 30 tightens the tightening components to the positions AA to be tightened of the assembly 200 to be tightened, thereby completing the tightening operation. Since the positions AA to be tightened of the assembly 200 to be tightened are identified by the vision device 40 before the tightening operation, the moving device 20 is capable of accurately driving the tightening device 30 to be right above the positions AA to be tightened to tighten the tightening components to the positions AA to be tightened of the assembly 200 to be tightened with success. Therefore, the tightening failure rate of the tightening components is reduced, and due to the use of the tightening device 30 that automatically tightens the assembly 200 to be tightened, the tightening efficiency is also improved.

Referring to FIGs. 1 and 2, according to some embodiments of the present application, the loading station 10 includes a transport platform 11 and a positioning mechanism 12. The transport platform 11 is capable of bearing and transporting the assembly 200 to be tightened, and the positioning mechanism 12 is capable of positioning the assembly 200 to be tightened on the transport platform 11.

The transport platform 11 refers to a mechanism provided with both transportation and bearing functions. After the assembly 200 to be tightened is placed on the transport platform 11, the transport platform 11 is capable of transporting the assembly 200 to be tightened to a preset position.

The positioning mechanism 12 is a mechanism that is capable of positioning the assembly 200 to be tightened on the transport platform 11 at a preset position. The positioning mechanism 12 may position the assembly 200 to be tightened by blocking the motion of the assembly 200 to be tightened on the transport platform 11. Specifically, the positioning mechanism 12 may include a stop block, a stop plate, or the like.

Typically, the transport platform 11 is capable of directly interfacing with and transporting the assembly 200 to be tightened to the transport mechanism of the tightening apparatus 100, such that the manufacturing continuity of the product corresponding to the assembly 200 to be tightened is enhanced, thereby improving the production efficiency, while the arrangement of the positioning mechanism 12 ensures that the assembly 200 to be tightened is more reliably positioned on the transport platform 11 to facilitate corresponding operations on the assembly 200 to be tightened by other devices of the tightening apparatus 100.

Specifically, the transport platform 11 includes a transport frame 111 and a plurality of transport wheels 112, each of the plurality of transport wheels 112 at least partially protrudes from the surface of the transport frame 111 to bear and transport the assembly 200 to be tightened.

The plurality of transport wheels 112 may actively rotate to transport the assembly 200 to be tightened, or a pushing drive component may be used to push the assembly 200 to be tightened to slide over the plurality of transport wheels 112.

In some embodiments, the positioning mechanism 12 includes a telescoping component that is capable of performing a telescoping motion. When the positioning mechanism 12 positions the assembly 200 to be tightened on the transport platform 11, the telescoping component is capable of extending out of the surface of the transport platform 11 to abut against one side of the assembly 200 to be tightened.

Specifically, there are at least two telescoping components, which are spaced apart from each other along the transport direction of the transport platform 11. A positioning location for the assembly 200 to be tightened is formed between at least two telescoping components.

The telescoping component may be retracted when positioning of the assembly 200 to be tightened is not required.

In some embodiments, the positioning mechanism 12 may be arranged below the transport platform 11. The transport platform 11 is provided with a communication hole for the telescoping component to pass through. The telescoping component is capable of extending out of or retracting into the surface of the transport platform 11 through the communication hole.

Referring to FIG. 1, according to some embodiments of the present application, the moving device 20 includes a robot arm, and both the tightening device 30 and the vision device 40 are arranged on the robot arm.

Compared with other moving devices, the robot arm occupies less space, offers greater flexibility in motion, and is more conducive to precisely reaching the position to be tightened, thereby improving the reliability of the tightening process.

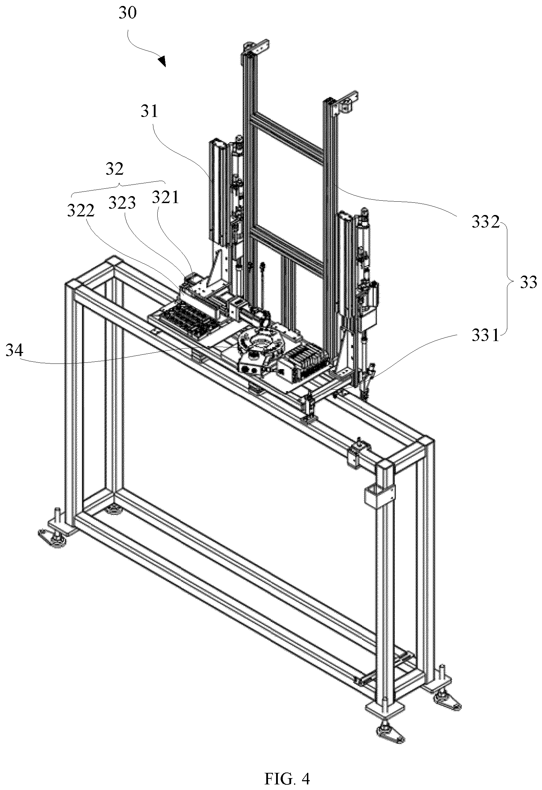

Referring to FIGs. 3 and 4, according to some embodiments of the present application, the tightening device 30 includes a plurality of tightening mechanisms 31, all of the tightening mechanisms 31 are spaced apart from each other, and each tightening mechanism 31 is capable of tightening the tightening component to the corresponding position AA to be tightened of the assembly 200 to be tightened.

By the arrangement of the plurality of tightening mechanisms 31, a plurality of positions AA to be tightened of the assembly 200 to be tightened can be tightened simultaneously, thereby improving the tightening efficiency.

It should be noted here that the vision device 40 may identify a plurality of positions AA to be tightened of the assembly 200 to be tightened, such that a plurality of tightening mechanisms 31 may simultaneously tighten the plurality of positions AA to be tightened of the assembly 200 to be tightened.

In the embodiments of the present application, the tightening device 30 includes two tightening mechanisms 31, and the two tightening mechanisms 31 are spaced apart from each other.

Further, the tightening device 30 further includes a pitch adjustment mechanism 32, the pitch adjustment mechanism 32 being connected to at least one tightening mechanism 31 and configured to adjust the spacing between at least two tightening mechanisms 31.

When tightening operations are performed on assemblies 200 to be tightened with different models, due to various dimensions of the assemblies 200 to be tightened, the positions AA to be tightened of each assembly 200 to be tightened are different. In the case where there are numerous tightening mechanisms 31, the pitch adjustment mechanism 32 may be used to adjust the spacing between at least two tightening mechanisms 31, allowing the tightening mechanisms 31 to adapt to the tightening operations at different positions AA to be tightened, thereby enhancing the adaptability of the tightening apparatus 100.

Specifically, the pitch adjustment mechanism 32 may be a translational pitch adjustment mechanism that is horizontally movable to adjust the spacing between at least two tightening mechanisms 31.

In the embodiments of the present application, the pitch adjustment mechanism 32 includes a translation cylinder 321, and the translation cylinder 321 is connected to one tightening mechanism 31 and configured to push the tightening mechanism 31 distal to or proximal to another adjacent tightening mechanism 31.

The translational motion of the translation cylinder 321 is smooth, such that the pitch adjustment between the tightening mechanism 31 and another tightening mechanism 31 is smooth.

Further, the pitch adjustment mechanism 32 further includes a guide rail 322 and a slider 323, where the slider 323 is connected to the translation cylinder 321 and the tightening mechanism 31, the slider 323 is in sliding fit with the guide rail 322, and the guide rail 322 is configured to guide the slider 323 to move along the translation direction of the translation cylinder 321.

By arrangement of the guide rail 322 and the slider 323, the stability of the translational motion of the tightening mechanism 31 in the translation cylinder 321 can be improved.

In some embodiments, the tightening device 30 includes tightening supports 33, and all of the tightening mechanisms 31 and the pitch adjustment mechanism 32 may be arranged on the tightening supports 33.

In order not to affect the tightening operations of the tightening mechanisms 31, all of the tightening mechanisms 31 may be arranged on the same side of the tightening supports 33, and the pitch adjustment mechanism 32 may be arranged on one side of the tightening support 33 away from the tightening mechanism 31.

Specifically, the tightening support 33 includes a base 331 and a vertical frame 332, where the vertical frame 332 is located on one side of the base 331, and the bottom of the vertical frame is connected to the base 331. All of the tightening mechanisms 31 are arranged outside the vertical frames 332, and the pitch adjustment mechanism 32 is arranged on the base 331.

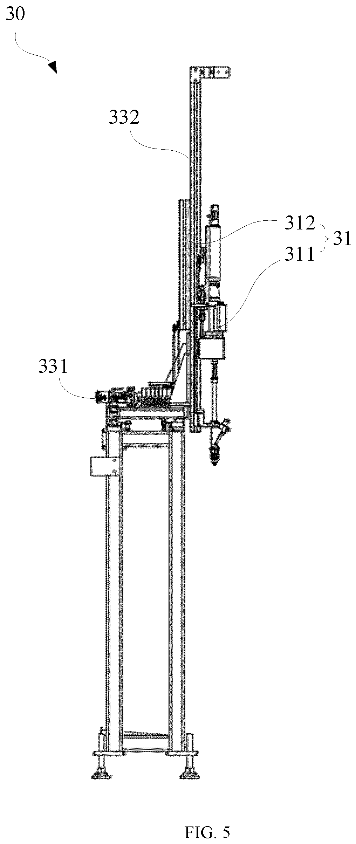

Referring to FIG. 5, according to some embodiments of the present application, the tightening mechanism 31 includes a mechanism body 311 and a lifting mechanism 312, where the lifting mechanism 312 is connected to the mechanism body 311 and configured to drive the mechanism body 311 to perform a lifting motion.

Specifically, the direction of the lifting mechanism 312 driving the mechanism body 311 to perform a lifting motion is the Z direction shown in FIG. 1. The pitch adjustment mechanism 32 adjusts the spacing direction between at least two tightening mechanisms 31 to be perpendicular to the lifting motion direction of the lifting mechanisms 312.

By arranging the lifting mechanism 312 to drive the mechanism body 311 to perform a lifting motion, in an aspect, the mechanism body 311 is capable of descending to a position proximal to the assembly 200 to be tightened to facilitate the tightening operation, and in another aspect, the mechanism body 311 is capable of being lifted up to reduce the damage caused by collision between the mechanism body 311 and other devices when the moving device 20 drives the tightening device 30 to move.

In some embodiments, the lifting mechanism 312 may include a lifting drive cylinder, and in other ways, may also be a lifting drive hydraulic cylinder, or the like.

In some embodiments, the mechanism body 311 may be a tightening gun, and the tightening gun is capable of tightening the tightening component to the position AA to be tightened of the assembly 200 to be tightened. The tightening gun may be an electric tightening gun or a start-up tightening gun.

Specifically, when the tightening gun works to drive the tightening component to be tightened to a preset torque, the tightening component may be tightened.

Referring to FIGs. 1 and 3, according to some embodiments of the present application, the moving device 20 is capable of driving the vision device 40 to move along a preset direction to identify a plurality of positions AA to be tightened of the assembly to be tightened 200 on the loading station 10. The moving device 20 is configured to control the tightening device 30 to sequentially move right above the plurality of positions AA to be tightened according to the plurality of positions AA to be tightened of the assembly 200 to be tightened that are identified by the vision device 40, and the tightening device 30 tightens the respective tightening component to each position AA to be tightened.

Generally, there are a plurality of positions AA to be tightened of the assembly 200 to be tightened, such that the assemblies 200 to be tightened have a close connection relationship; if all of the positions AA to be tightened are simultaneously tightened by the tightening device 30, once one of the positions AA to be tightened fails to be tightened, all of the positions AA to be tightened need to be re-tightened, which may cause a reduction in the tightening efficiency. Therefore, in the case where there are a plurality of positions AA to be tightened, the moving device 20 is arranged to drive the vision device 40 to move along a preset direction to acquire the plurality of positions AA to be tightened of the assembly 200 to be tightened. Subsequently, according to the plurality of positions AA to be tightened, the moving device 20 controls the tightening device 30 to sequentially move right above the plurality of positions AA to be tightened, and the tightening device 30 tightens the respective tightening component to each position AA to be tightened, which can satisfy sequential tightening operations on the plurality of positions AA to be tightened and increase the tightening success rate, thereby improving the tightening efficiency.

For example, when there are seven positions AA to be tightened of the assembly 200 to be tightened that are spaced apart from each other along the length direction of the assembly 200 to be tightened, the moving device 20 is capable of driving the vision device 40 to move along the length direction of the assembly 200 to be tightened to sequentially identify the seven positions AA to be tightened of the assembly 200 to be tightened, the moving device 20 then controls the tightening device 30 to firstly move to the first position AA to be tightened according to the seven positions AA to be tightened, and the tightening device 30 performs the corresponding tightening operation. After the tightening is completed, the moving device 20 drives the tightening device 30 to move to the second position AA to be tightened, and the tightening device 30 performs the corresponding tightening operation, and so on, until the tightening operation on the seventh position AA to be tightened is completed.

Referring again to FIG. 1, according to some embodiments of the present application, the vision device 40 includes at least two cameras 41, all of the cameras 41 being configured to jointly identify at least two positions AA to be tightened of the assembly 200 to be tightened on the loading station 10.

The cameras 41 may acquire image information of the assembly 200 to be tightened in a photographing manner, and then identify the positions AA to be tightened of the assembly 200 to be tightened based on the image information.

It is not only simple to arrange at least two cameras 41 to identify the positions AA to be tightened of the assembly 200 to be tightened on the loading station 10, but also has a wider field of view provided by at least two cameras 41, which is conducive to improving the reliability of the identification of the positions to be tightened and may also adapt to an assembly 200 to be tightened which is provided with a larger dimension.

Specifically, all of the cameras 41 are spaced apart from each other. The arrangement of all the cameras 41 may be determined according to the positions AA to be tightened on the assembly 200 to be tightened. For example, in the embodiments of the present application, there are two cameras 41, and when the moving device 20 drives the cameras 41 to the photographing position, the two cameras 41 are spaced apart from each other along the width direction of the assembly 200 to be tightened, such that the two cameras 41 are capable of identifying at least two positions AA to be tightened in the width direction of the assembly 200 to be tightened.

In some embodiments, each camera 41 is configured to acquire one position AA to be tightened of the assembly 200 to be tightened.

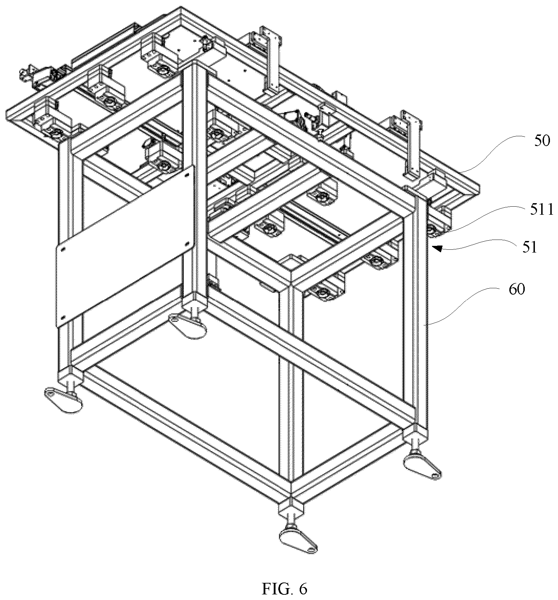

Referring to FIGs. 1, 2 and 6, according to some embodiments of the present application, the tightening apparatus 100 further includes a gripping device 50, the gripping device 50 being capable of being arranged on the moving device 20. The gripping device 50 is configured to grip a first component 210 to be tightened in the assembly 200 to be tightened at a gripping position, and place the first component 210 to be tightened at a placement position on the loading station 10, such that the first component 210 to be tightened is assembled with other components to be tightened in the assembly 200 to be tightened on the loading station.

It should be understood that the gripping position and the placement position are two different positions, and the first component 210 to be tightened may be placed in the gripping position in advance for the gripping device 50 to grip. For example, the first component 210 to be tightened is a cover body, the gripping position may be a storage position where the first components 210 to be tightened are stacked, and the gripping device 50 may grip the first component 210 to be tightened stacked uppermost at a time, but of course, only one first component 210 to be tightened may be placed in the gripping position.

Other components to be tightened in the assembly 200 to be tightened may be placed in the placement position in advance, such that the gripping device 50 can assemble the gripped first component 210 to be tightened with other components to be tightened in the placement position, thus facilitating the subsequent tightening operation. For example, the assembly 200 to be tightened further includes a second component 220 to be tightened, the second component 220 to be tightened being a case body.

By arranging the gripping device 50, the first component 210 to be tightened can be automatically gripped and assembled with other components to be tightened, which can improve the assembly precision, thereby increasing the tightening success rate. Secondly, the gripping device 50 and the tightening device 30 share the same moving device 20, which simplifies the overall structure of the tightening apparatus 100 and saves space.

Specifically, the tightening apparatus 100 may be provided with a placement support 60 at the corresponding gripping position, and the first component 210 to be tightened may be placed on the placement support 60 for the gripping device 50 to grip.

In some embodiments, the gripping device 50 may include a suction cup 51, and the first component 210 to be tightened is sucked by the suction cup 51. Specifically, the suction cup 51 may include a plurality of sub-suction cups 511, the sub-suction cups 511 being spaced apart from each other.

In other embodiments, the gripping device 50 may also be a jaw, a magnetic attraction component, or the like.

Referring to FIG. 1, combined with FIGs. 2 and 4, further, the moving device 20 is capable of mating with one of the gripping device 50 or the tightening device 30.

The operations of the gripping device 50 and the tightening device 30 cannot be performed simultaneously, therefore, when both the gripping device 50 and the tightening device 30 are arranged on the moving device 20 at the same time, in an aspect, the independent operation of the gripping device 50 and the tightening device 30 is affected, and in another aspect, the load on the moving device 20 is also increased. Therefore, by arranging the moving device 20 to mate with one of the gripping device 50 or the tightening device 30, the moving device 20 is capable of detaching the tightening device 30 and only mating with the gripping device 50 when the gripping device 50 is required to grip the first component 210 to be tightened; while the moving device 20 is capable of detaching the gripping device 50 and only mating with the tightening device 30 when the tightening device 30 is required for a tightening operation. This not only improves the reliability of the independent operation of the gripping device 50 and the tightening device 30, but also reduces the load on the moving device 20.

Specifically, the tightening device 30 includes a first mating structure 34, and the moving device 20 includes a switching mechanism, the switching mechanism being capable of mating with or detaching from the first mating structure 34 of the tightening device 30.

Similarly, the gripping device 50 includes a second mating structure 52, and the switching mechanism is capable of mating with or detaching from the second mating structure 52 of the moving device 20.

In this way, the switching mechanism is capable of mating with or detaching from the first mating structure 24 and the second mating structure to improve the reliability and the precision of the moving device 20's mating with the tightening device 30 or the gripping device 50.

In some embodiments, the switching mechanism may be a suction mechanism that sucks the first mating structure or the second mating structure by suction to mate with the tightening device 30 or the moving device 20. In other embodiments, the switching mechanism may also be a magnetic attraction mechanism that sucks the first mating structure or the second mating structure by magnetic force to mate with the tightening device 30 or the moving device 20.

Referring to FIG. 3, according to some embodiments of the present application, the tightening apparatus 100 further includes a pressing device 70, the pressing device 70 being arranged on the loading station 10. The pressing device 70 is configured to press the assembly 200 to be tightened on the loading station 10 or to detach from the assembly 200 to be tightened.

The pressing device 70 is capable of pressing the assembly 200 to be tightened, such that the positional relationship between the components of the assembly 200 to be tightened can be maintained and the position of the assembly 200 to be tightened as a whole is fixed.

The pressing device 70 may press in the combination direction of the components of the assembly 200 to be tightened. For example, when the components of the assembly 200 to be tightened are combined in the vertical direction, the pressing device 70 may press in the vertical direction, when the components of the assembly 200 to be tightened are combined in the horizontal direction, the pressing device 70 may press in the horizontal direction, and of course, the pressing device 70 may also simultaneously press the assembly 200 to be tightened in a plurality of directions.

By using the pressing device 70 to press the assembly 200 to be tightened on the loading station 10, the assembly 200 to be tightened can be fixed before the tightening device 30 performs the tightening operation, which reduces the force exerted on the assembly 200 to be tightened during the tightening process and prevents positional shifts between components that could lead to tightening failure. Therefore, the tightening success rate is improved.

Specifically, the pressing operation of the pressing device 70 may be performed at any time after the gripping device 50 places the first component 210 to be tightened at the placement position to assemble the first component 210 to be tightened with the other components to be tightened in the assembly 200 to be tightened, and before the tightening device 30 tightens the tightening components to the positions AA to be tightened of the assembly 200 to be tightened. In the embodiments of the present application, after the gripping device 50 places the first component 210 to be tightened at the placement position, the pressing device 70 presses the assembly 200 to be tightened on the loading station 10.

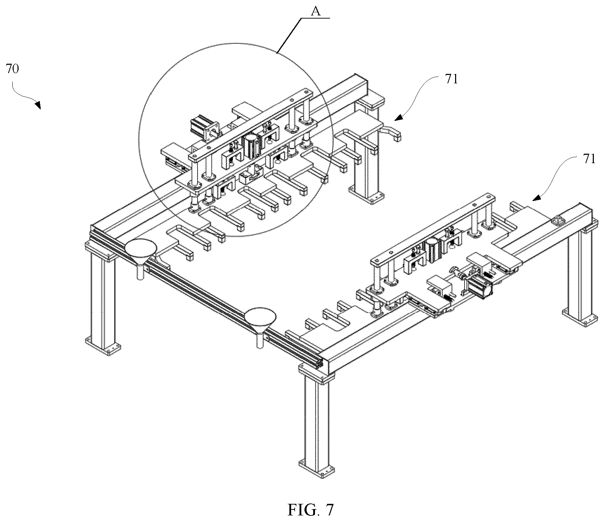

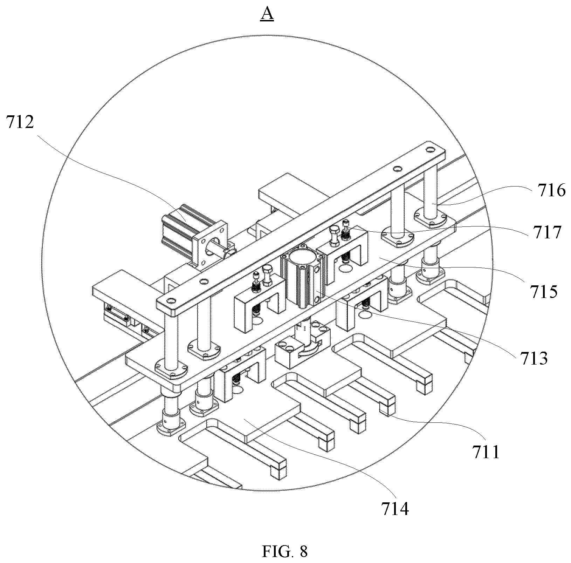

Referring to FIGs. 7 and 8, according to some embodiments of the present application, the pressing device 70 includes pressing assemblies 71, and each pressing assembly 71 includes pressing blocks 711, a telescoping mechanism 712, and a pressing drive mechanism 713. The telescoping mechanism 712 and the pressing drive mechanism 713 are both connected to the pressing blocks 711, the telescoping mechanism 712 is configured to drive the pressing blocks 711 to perform a telescoping motion, and the pressing drive mechanism 713 is configured to drive the pressing blocks 711 to perform a pressing motion to press the assembly 200 to be tightened on the loading station 10, the direction of the pressing motion intersecting with the direction of the telescoping motion.

Specifically, after the gripping device 50 places the first component 210 to be tightened at the placement position, the telescoping mechanism 712 of the pressing assembly 71 drives the pressing blocks 711 to extend, and the pressing drive mechanism 713 of the pressing assembly 71 drives the pressing blocks 711 to press the assembly 200 to be tightened on the loading station 10. After the tightening device 30 tightens the tightening components to the positions AA to be tightened, the pressing drive mechanism 713 of the pressing assembly 71 drives the pressing blocks 711 to loosen the assembly 200 to be tightened on the loading station 10, and the telescoping mechanism 712 of the pressing assembly 71 drives the pressing blocks 711 to retract.

The direction of the pressing motion may be the Z direction shown in FIG. 1, and the direction of the telescoping motion may be the Y direction shown in FIG. 1.

By connecting the pressing drive mechanism 713 to the pressing blocks 711, the pressing blocks 711 are capable of pressing the assembly 200 to be tightened on the loading station 10, thus simplifying the pressing process. By connecting the telescoping mechanism 712 to the pressing blocks 711, in an aspect, when the telescoping mechanism extends, the pressing blocks 711 can accurately press the assembly 200 to be tightened, and in another aspect, when the telescoping mechanism retracts, the placement of the first component 210 to be tightened by the aforementioned gripping device 50 at the placement position is not affected, and the identification of the position AA to be tightened of the assembly 200 to be tightened by a vision device 40 on the loading station 10 is not affected either.

Further, there are a plurality of pressing blocks 711, the clearance space AA is formed between at least two adjacent pressing blocks 711 that are spaced apart, and the clearance space AA is configured to expose the position AA to be tightened of the assembly 200 to be tightened.

By forming the clearance space between at least two adjacent pressing blocks 711 that are spaced apart, the impact of the pressing blocks 711 on the tightening operation on the assembly 200 to be tightened by the tightening device 30 is reduced, making the tightening operation more reliable.

In addition, the respective pressing blocks 711 are capable of pressing different positions of the assembly 200 to be tightened on the loading station 10. Specifically, the respective pressing blocks 711 are sequentially disposed in the X direction shown in FIG. 1.

In some embodiments, two adjacent pressing blocks 711 are spaced apart from each other to form a clearance space. In other embodiments, the partial pressing blocks 711 may not be spaced or may be spaced without the clearance space formed therebetween, and thus, the pressing area of the pressing device 70 to the assembly 200 to be tightened may be increased to improve the reliability of the pressing process.

In some embodiments, the telescoping mechanism 712 is capable of being connected to the pressing blocks 711 via the pressing drive mechanism 713. That is, when the telescoping mechanism 712 performs a telescoping motion, the pressing drive mechanism 713 is capable of being driven to move to further drive the pressing blocks 711 to move.

Specifically, the pressing assembly 71 further includes a first connecting plate 714, and all of the pressing blocks 711 are connected to one end of the first connecting plate 714. The first connecting plate 714 is connected to a movable end of the pressing drive mechanism 713. Further, the pressing assembly 71 further includes a second connecting plate 715, the pressing drive mechanism 713 is mounted on the second connecting plate 715, and the second connecting plate 715 is connected to a movable end of the telescoping mechanism 712.

Both the pressing drive mechanism 713 and the telescoping mechanism 712 may be drive cylinders, drive oil cylinders, or the like that move linearly.

In order to improve the smoothness of the pressing motion of all the pressing blocks 711 driven by the pressing drive mechanism 713, in the embodiments of the present application, the pressing assembly 71 further includes a plurality of guide rods 716, and the plurality of guide rods 716 penetrate through the second connecting plate 715 and are connected to the first connecting plate 714 and configured to guide the first connecting plate 714 to move along the pressing direction.

In some embodiments, the pressing assembly 71 further includes buffer members 717, the buffer members 717 being arranged between the first connecting plate 714 and the second connecting plate 715.

By arrangement of the buffer members 717, the acting force between the first connecting plate 714 and the second connecting plate 715 when the pressing drive mechanism 713 drives all the pressing blocks 711 to loosen the assembly 200 to be pressed can be reduced, thus reducing the mechanical damage.

The buffer member 717 may be a buffer cylinder, a buffer spring, or the like.

According to some embodiments of the present application, the pressing device 70 includes at least two sets of pressing assemblies 71, and the at least two sets of pressing assemblies 71 are oppositely arranged along the direction of the telescoping motion.

In this way, pressing can be formed on at least two opposite sides of the assembly 200 to be pressed, thereby improving the reliability of the pressing process.

In order to more clearly understand the working principle of the tightening apparatus according to the embodiments of the present application, the working process of the tightening apparatus is described in detail below:

The loading station 10 loads the second component 220 to be tightened, and after the loading is completed, the moving device 20 mates with the gripping device 50 to grip the first component 210 to be tightened at the gripping position, and the moving device 20 drives the first component 210 to be tightened to move to a position above the second component 220 to be tightened and assemble with the second component 220 to be tightened.

At this time, the gripping device 50 is detached from the moving device 20 and the moving device 20 then mates with the tightening device 30. The moving device 20 drives the vision device 40 on the tightening device 30 to a position right above the component 200 to be tightened, and identifies the position AA to be tightened of the assembly 200 to be tightened. After the identification is completed, the pressing device 70 presses the upper part of the first component 210 to be tightened, such that the assembly 200 to be tightened is pressed on the loading station 10. After the pressing is completed, the tightening device 30 tightens the tightening components to the positions AA to be tightened. After the tightening operation is completed, the pressing device 70 is detached from the assembly 200 to be tightened.

In addition, the embodiments of the present application further provide a battery manufacturing system, which includes the tightening apparatus 100 in any of the embodiments described above.

After the loading station 10 bears the assembly 200 to be tightened, the moving device 20 may drive the vision device 40 proximal to the assembly 200 to be tightened to identify the positions AA to be tightened of the assembly 200 to be tightened; according to the positions AA to be tightened, the moving device 20 may control the tightening device 30 to move to the positions AA to be tightened; and subsequently, the tightening device 30 tightens the tightening components to the positions AA to be tightened of the assembly 200 to be tightened, thereby completing the tightening operation. Since the positions AA to be tightened of the assembly 200 to be tightened are identified by the vision device 40 before the tightening operation, the moving device 20 is capable of accurately driving the tightening device 30 to be right above the positions AA to be tightened to tighten the tightening components to the positions AA to be tightened of the assembly 200 to be tightened with success. Therefore, the tightening failure rate of the tightening components is reduced, and due to the use of the tightening device 30 that automatically tightens the assembly 200 to be tightened, the tightening efficiency is also improved.

In the embodiments of the present application, the assemblies 200 to be tightened are a case body and a case cover.

In some embodiments, the battery manufacturing system further includes: a module assembling apparatus, configured to assemble battery modules into the case body; and a transfer apparatus, configured to transfer the case body that is assembled with the battery modules to the tightening apparatus 100, and the tightening apparatus 100 is configured to tighten the case body and the case cover using screws to form a battery pack.

Further, the battery manufacturing system further includes a testing apparatus, where the testing apparatus is configured to carry out performance tests on the battery pack, including voltage tests, current tests, insulation tests, and the like.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some or all of the technical features; however, these modifications or substitutions do not make the essence of the corresponding technical solutions deviate from the spirit and scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A tightening apparatus, comprising:
a loading station, configured to bear an assembly to be tightened;
a moving device, capable of moving relative to the loading station;
a tightening device, arranged on the moving device; and
a vision device, arranged on the moving device and configured to identify positions to be tightened of the assembly to be tightened on the loading station;
wherein the moving device is configured to control the tightening device to move right above the positions to be tightened according to the positions to be tightened of the assembly to be tightened that are identified by the vision device, and the tightening device is configured to tighten tightening components to the positions to be tightened.

2. The tightening apparatus according to claim **1,** wherein the tightening device comprises a plurality of tightening mechanisms, all of the tightening mechanisms are spaced apart from each other, and each tightening mechanism is capable of tightening the tightening component to the corresponding position to be tightened.

3. The tightening apparatus according to claim 2, wherein the tightening device further comprises a pitch adjustment mechanism, the pitch adjustment mechanism being connected to at least one of the tightening mechanisms and configured to adjust a spacing between at least two of the tightening mechanisms.

4. The tightening apparatus according to claim 2 or 3, wherein the tightening mechanism comprises a mechanism body and a lifting mechanism, the lifting mechanism being connected to the mechanism body and configured to drive the mechanism body to perform a lifting motion.

5. The tightening apparatus according to any one of claims 1 to 4, wherein the moving device is capable of driving the vision device to move along a preset direction to identify a plurality of the positions to be tightened of the assembly to be tightened on the loading station;
the moving device is configured to control the tightening device to sequentially move right above the plurality of positions to be tightened according to the plurality of positions to be tightened of the assembly to be tightened that are identified by the vision device, and the tightening device tightens the respective tightening component to each position to be tightened.

6. The tightening apparatus according to any one of claims 1 to 5, wherein the vision device comprises at least two cameras, all of the cameras being configured to jointly identify at least two of the positions to be tightened of the assembly to be tightened on the loading station.

7. The tightening apparatus according to any one of claims 1 to 6, wherein the tightening apparatus further comprises a gripping device, the gripping device being capable of being arranged on the moving device;
the gripping device is configured to grip a first component to be tightened in the assembly to be tightened at a gripping position, and place the first component to be tightened at a placement position on the loading station, such that the first component to be tightened is assembled with other components to be tightened in the assembly to be tightened on the loading station.

8. The tightening apparatus according to claim 7, wherein the moving device is capable of mating with one of the gripping device or the tightening device.

9. The tightening apparatus according to claim 7 or 8, wherein the tightening device comprises a first mating structure, and the moving device comprises a switching mechanism, the switching mechanism being capable of mating with or detaching from the first mating structure;
the gripping device comprises a second mating structure, and the switching mechanism is also capable of mating with or detaching from the second mating structure.

10. The tightening apparatus according to any one of claims 1 to 9, wherein the tightening apparatus further comprises a pressing device, the pressing device being arranged on the loading station;
the pressing device is configured to press the assembly to be tightened on the loading station or to detach from the assembly to be tightened.

11. The tightening apparatus according to claim 10, wherein the pressing device comprises pressing assemblies, and each pressing assembly comprises pressing blocks, a telescoping mechanism, and a pressing drive mechanism, wherein the telescoping mechanism is connected to the pressing drive mechanism and the pressing blocks, the telescoping mechanism is configured to drive the pressing blocks to perform a telescoping motion, and the pressing drive mechanism is configured to drive the pressing blocks to perform a pressing motion to press the assembly to be tightened on the loading station, a direction of the pressing motion intersecting with a direction of the telescoping motion.

12. The tightening apparatus according to claim 11, wherein there are a plurality of the pressing blocks, a clearance space is formed between at least two adjacent pressing blocks, and the clearance space is configured to expose the position to be tightened of the assembly to be tightened.

13. The tightening apparatus according to claim 11 or 12, wherein the pressing device comprises at least two sets of the pressing assemblies, and the at least two sets of pressing assemblies are oppositely arranged along the direction of the telescoping motion.

14. The tightening apparatus according to any one of claims 1 to 13, wherein the loading station further comprises a transport platform and a positioning mechanism, wherein the transport platform is capable of bearing and transporting the assembly to be tightened, and the positioning mechanism is capable of positioning the assembly to be tightened on the transport platform.

15. A battery manufacturing system, comprising the tightening apparatus according to any one of claims 1 to 14.
